# EUROPÄISCHE PATENTANMELDUNG

(11) **EP 1 347 118 A1**
(43) Veröffentlichungstag der Anmeldung: **24.09.2003**
(21) Anmeldenummer: 03005923.2
(22) Anmeldetag: 17.03.2003
(51) Int. Cl.: E04F 15/20, E04C 2/20, B29C 44/56

(54) **Polyethylenschaum mit geringer dynamischer Steifigkeit**

(30) Priorität: 22.03.2002 DE 10212729
(71) Anmelder: Gefinex Gesellschaft für Innovative Extrusionsprodukte mbh, 16928 Steffenshagen (DE)
(72) Erfinder: Retsch, Wolfgang, 16928 Steffenshagen (DE)
(74) Vertreter: Kaewert, Klaus

(57) **Zusammenfassung**

Nach der Erfindung wird die dynamische Steifigkeit von PE-Schaum zur Beeinflussung der Schalldämmung verändert durch Verringerung des Anteils der tragenden Zellen im Zellgerüst.

## Beschreibung

Die Erfindung betrifft die Herstellung von einem flächigen, in der Regel bahn- oder plattenförmigen Dämmstoff aus geschlossenzelligen Polyethylenleichtschaum mit geringer dynamischer Steifigkeit zur Schallentkopplung von zweischaligen Bauteilen (Koppelresonanz). Polyethylenschaum ist z.B. beschrieben in Saechtling, Kunststoff Taschenbuch, 27.Aufl., S. 375 ff. Darüber hinaus ist dort beschrieben, wie aus Polyethylen ein Polyethylenschaum hergestellt wird.

Durch zwei- oder mehrschalige Konstruktionen lassen sich bei gleicher flächenbezogener Masse höhere Schalldämmmaße oberhalb der Resonanzfrequenz erreichen als bei gleich schweren einschaligen Konstruktionen. Neben anderen Kriterien ist eine möglichst geringe Verkopplung zwischen den Schalen erforderlich. Das bedeutet, es muss ein ausreichender Hohlraum zwischen den beiden Schalen bestehen, der häufig durch einen weichen Dämmstoff ausgefüllt wird. Außerdem müssen Schallbrücken in Form von Verbindungen beider Schalen entweder vermieden oder durch konstruktive Maßnahmen weich ausgebildet werden.

Es lassen sich 3 Grundtypen für zweischalige Konstruktionen ableiten:
1. zwei biegesteife Schalen
2. biegesteife Schale mit biegeweicher Vorsatzschale
3. zwei biegeweiche Schalen

Die beiden Schalen eines zweischaligen Bauteils können zusammen mit einer federnden Zwischenschicht als Feder - Masse - System betrachtet werden. Ein solches System ist selbst schwingungsfähig und schwingt nach Erregung, z. B. nach einem Stoß, mit einer bestimmten Eigenfrequenz.

Nahe der Eigenfrequenz zweischaliger Bauteile ist die Schalldämmung schlecht. Die Eigenfrequenz sollte daher stets außerhalb des akustisch bewerteten Frequenzbereichs zwischen 100 und 3200 Hz, insbesondere unter 100 Hz, liegen. Weit oberhalb der Eigenfrequenz ist die Schalldämmung zweischaliger Bauteile besser als die einschaliger mit gleicher flächenbezogener Masse, unterhalb der Eigenfrequenz dämmen beide Bauteiltypen nahezu gleich.

Decken im Hochbau, besonders in Gebäuden in denen sich Menschen aufhalten, werden gewöhnlich aus einer schweren, meist biegesteifen Massivdecke hergestellt, deren Luft- und Trittschallschutz durch einen schwimmenden Fußboden, als zusätzliche Schale verbessert wird. Die zusätzliche Schale wird auch als schwimmender Estrich bezeichnet, der von der Massivdecke und den angrenzenden Wänden durch einen Dämmstoff getrennt ist, d. h. auf einer weich federnden Dämmschicht "schwimmt".

Die lastverteilende Estrichplatte, Dämmschicht und Randdämmstreifen sind die drei wichtigsten Elemente eines schwimmenden Fußbodens, die seine schalltechnischen Eigenschaften bestimmen. Als Dämmschicht finden vorwiegend Glas- und Mineralfaserplatten und -matten, weich federnde Schaumkunststoffe oder elastische Schüttstoffe Verwendung.

Beispiele für schalldämmende Anordnungen, in denen ein bahn- oder plattenförmiger Dämmstoff dieser Art eingesetzt wird, sind schwimmende Estriche, Randdämmstreifen bei Estrichen, Trennfugen in Estrichen, Parkettunterlagen, zweischalige Wände aus zwei biegesteifen Schalen mit durchgehender Trennfuge, biegesteife Wände mit biegeweicher Vorsatzschale.

Der PE-Schaum hat diverse Vorteile. Allerdings erreicht die Schalldämmung von PE-Schaum nicht die Spitzenwerte von anderen schalldämmenden Materialien.

Die Aufgabe der Erfindung ist die Verbesserung der Schalldämmung von PE-Schaum, insbesondere eines dünnen, geschlossenzelligen Polyethylenleichtschaums. Der Polyethylenleichtschaum wird zwischen den Schalen oder in der Trennfuge angeordnet. Dabei geht die Erfindung davon aus, daß die Schalldämmung maßgeblich durch die dynamische Steifigkeit bestimmt wird.

Die Hauptbedeutung der dynamischen Steifigkeit von Dämmstoffen ist im Zusammenhang mit schwimmenden Estrichen auf Massivdecken zu sehen. Eine vorteilhafte niedrige Resonanzfrequenz lässt sich durch große Masse der Schalen und durch eine geringe dynamische Steifigkeit der durch Luft bzw. Dämmstoff gebildeten Feder erreichen.

Im eingebauten belasteten Zustand übernimmt beim Polyethylenleichtschaum das eingeschlossene Zellgas die statische tragende Funktion. Bei einer Fußbodenkonstruktion im Wohnungsbau werden üblicherweise 0,75 kN/m² für einen Estrich und eine Verkehrslast von 2 kN/m² angesetzt. Diese Last muss von dem Polyethylenleichtschaum dauerhaft aufgenommen werden. Das läßt sich in einem Dauerstandsversuch über einen repräsentativen Zeitraum nachweisen und im übrigen auf einen längeren Zeitraum hoch rechnen.

Das Maß der Schalldämmung wird in der Anwendung auf die Trittschalldämmung als Trittschallverbesserungsmaß bezeichnet. Das Trittschallverbesserungsmaß läßt sich in der oben beschriebenen Form mit 19 dB nachweisen. Werte für das Trittschallverbesserungsmaß liegen in der Regel bei Polyethylenleichtschaum unter 20 dB. In dieser Anwendung sind vorzugsweise Schaumdicken von 5 bis 8 mm und vorzugsweise ein Raumgewicht von 15 bis 30 kg pro Kubikmeter vorgesehen.

Die Dämmschicht wird hinsichtlich Ihrer trittschallmindernden Wirksamkeit durch ihre dynamische Steifigkeit charakterisiert.

Als Deckenauflage für massive Decken werden heute fast ausnahmslos schwimmende Estriche verwendet, weil dadurch die Trittschalldämmung wirkungsvoll erhöht werden kann. Das Trittschallverbesserungsmaß einer solchen Deckenauflage ergibt sich im wesentlichen aus dem Federungsvermögen des zwischen Rohdecke und Estrich eingebauten Trittschalldämmstoffes. Das Federungsvermögen einer Zwischenschicht (Schicht zwischen zwei Schalen) wird durch die dynamische Steifigkeit ausgedrückt. Sie hängt vom dynamischen Elastizitätsmodul und der Schichtdicke des verwendeten Baustoffes ab.

Die Zellen von Polyethylenleichtschaum sind geschlossen und überwiegend mit Luft gefüllt. Bei einem Polyethylenleichtschaum wird die dynamische Steifigkeit deshalb maßgeblich von der Luftsteifigkeit bestimmt.

Die Tragfähigkeit übernimmt beim Polyethylenleichtschaum vorwiegend die in den Zellen eingeschlossene Luft. In den abgeschlossenen Hohlräumen der Zellen des Polyethylenleichtschaums wirkt der Schalldruck als Kraft die abwechselnd komprimiert und entspannt und die Zelle, bzw. der Hohlraum als Feder. Wird nun die Dichtigkeit einzelner Zellen, z. B. durch Nadelung, im Zellverband zerstört, können diese Zellen bei einer Belastung des Polyethylenleichtschaums ihren Innendruck nicht erhöhen, was zu einem stärkeren Federungseffekt und damit zu einer Verbesserung der dynamischen Steifigkeit, bei den verbleibenden intakten Zellen führt. Dabei entsteht eine Verringerung der Kontaktfläche, wie wenn profilierte Pappen oder profilierte Schaumkunststoffe verwendet werden, deren Profilierungen die wirksame dynamische Steifigkeit ebenfalls vermindern.

Unter Belastung, z. B. durch eine Estrichscheibe und den darauf befindlichen Verkehrslasten, drückt sich der Polyethylenleichtschaum unter Erhöhung des Zellinnendrucks geringfügig zusammen. Die Erhöhung des Zellinnendrucks führt wiederum zu einer höheren Steifigkeit der Zelle.

Vorzugsweise haben die Polyethylenschäume ein Raumgewicht kleiner 50 kg/m³ und besitzten der Polyethylenschaumeine eine Zellgröße von 1 bis 7 mm, noch weitere bevorzugt 2 bis 4 mm für Trittschalldämmstoffe.

Im Gegensatz zum Polyethylenleichtschaum wird die Tragfähigkeit bei Schaumkunststoffen wie EPS, XPS, Polyurethan und PP hauptsächlich durch das Zellgerüst bestimmt. Durch ein hohes Raumgewichte wird eine größere Zellstabilität erreicht. Eine geringe dynamische Steifigkeit von Schaumkunststoffen wie EPS wird hauptsächlich durch eine nachträgliche Veränderung des Schaumgefüges erreicht. Die Polystyrolblöcke werden dazu in einer Presse mechanisch gestaucht, wodurch das Zellgefüge irreversibel geschädigt wird, so dass die im Vergleich zum Polyethylenleichtschäumen sehr kleinen Zellen ihre Stabilität verlieren und der Dämmstoff weicher wird.

Grundlage der Erfindung ist, einen Teil der gasdichten und druckhaltenden Zellen durch eine Perforation gasundicht zu machen, also zu zerstören. Der verbleibende Anteil mit Gas / Luft gefüllten Zellen übernimmt die Aufgabe der fehlenden tragfähigen Zellen, zeigt nun aber bei gleich einwirkender Druckkraft ein verhältnismäßig stärkeres Einfedern. Der Polyethylenleichtschaum ist in seiner Eigenschaft nun weicher, was einer geringeren dynamischen Steifigkeit des Polyethylenleichtschaums gleichkommt.

Versuche haben gezeigt, dass die dynamische Steifigkeit von handelsüblicher 5 bis 6 mm dicker Trittschalldämmung Geficell deutlich reduziert werden konnte. Die dynamische Steifigkeit nach DIN EN 20052 wurde bei einer nicht behandelten Probe und einer mit Nadeln behandelten Probe gemessen. Bei der unbehandelten Probe ergab sich ein Wert der dyn. Steifigkeit s' von ca. 70 MN/m³. Die gleiche Probe mit einer Perforationsdichte von ca. 10 Nadeleinstichen pro cm² erreicht eine dynamische Steifigkeit von ca. 20 MN/m³. Die Probe wurde etwa 4 mm tief perforiert, so dass die Oberfläche intakt ist. Das daraus resultierende Trittschallverbesserungsmaß bei einem schwimmenden Estrich lag zwischen 20 und 30 dB, hauptsächlich zwischen 23 und 25 dB, so dass in der Regel die einfachen Anforderungen der Schallschutznorm DIN 4109 - Schallschutz im Hochbau- bei Massivbauten erreicht wurde.

Die Perforation muss nicht durch den gesamten Querschnitt des Polyethylenleichtschaums führen. Es reicht aus, wenn die untersten oder obersten Zellen perforiert und damit unter Belastung ohne Zellinnendruck sind.

Auf die dynamische Steifigkeit des Materials kann zugleich durch Mischung des Polyethylens mit anderen Materialien Einfluß genommen werden. Vorzugsweise beträgt dabei der Mischungsanteil von Polyethylen mindestens 50 Gew% von der Gesamtmischung. Vorzugsweise finden als Mischungsanteile EVA(Ethylen/Vinylacetat) und/oder Polypropylen und/oder PMMA (Polymethylmethacrylat) oder Derivate davon bzw. Copolymere davon Anwendung.

Der Polyethylenleichtschaum wird in Schaumextrusionsanlagen im Direktbegasungsverfahren hergestellt. Dabei wird zwischen folgenden Verfahrensabschnitten unterschieden:
1. Aufschmelzen des Kunststoffes und Mischen mit Additiven
2. Einspritzen des Treibgases
3. Verteilen und Lösen des Gases in der Kunststoffschmelze
4. Abkühlen der gasbeladenen Kunststoffschmelze auf Schäumtemperatur
5. Schäumbare Schmelze über eine Düse extrudieren

Bei der Herstellung dünner Schaumbahnen wird regelmäßig
6. die Schmelze über eine ringförmige Düse zu einem Schlauch extrudiert
6. Schlauch über Dorn oder Zylinder strecken
7. Schlauch aufschneiden, flachlegen und wickeln

Im Direktbegasungsverfahren wird ein Gas, vorzugsweise iso-Butan oder Propan als physikalisches Treibmittel beim Extrudieren in der Kunststoffschmelze unter hohen Druck im flüssigen Zustand eingebracht. Beim Austreten der Schmelze aus der Düse expandiert das Treibgas, so dass gasgefüllte Zellen entstehen.

Das Treibgas tauscht sich innerhalb weniger Wochen zum größten Teil mit der Umgebungsluft aus.

Der entstehende Schaum wird vorzugsweise in die Form von Folien mit einer Dicke zwischen 5 und 12 mm und einem Raumgewicht von 10 bis 80 kg pro Kubikmeter mit einer Zellgröße zwischen 1 und 7 mm, vorzugsweise zwischen 2 und 5 mm.

Günstig sind Bahnenwaren mit einer Breite von 500 bis 2000 mm, noch besser mit einer Breite von 1000 bis 1500 mm.
Je nach Raumgewicht stellt sich eine geringe oder erhebliche Steifigkeit ein. Bei geringen Raumgewichten kann der Schaum als Bahnenware gewickelt werden.
Bei größeren Raumgewichten entsteht Plattenware. Dann muß der aus dem Extruder endlos anfallende Schaumstrang in Abständen abgelängt werden.
Für Platten ist vorzugsweise eine Länge von 400 bis 2000 mm vorgesehen, noch weiter bevorzugt eine Länge von 500 bis 1000 mm.

Die Perforation der Zellen kann z. B. durch eine Nadelung erfolgen. Bei bahnen- oder plattenförmigen Dämmstoffen kann z. B. mit einer Nadelwalze die Perforierung durchgeführt werden. Die Nadeln haben vorzugsweise einen kleinen Durchmesser von ca. 0,1 bis 3 mm. Anstelle der Nadelwalzen können auch Nadelbalken und Nadelbretter zum Einsatz kommen.

Die Nadelwalze wird auf dem Schaum abgerollt und führt aufgrund ihrer Rollbewegung beim Eintauchen in den Schaum nicht nur eine Hub- und Senkbewegung sondern auch eine Schwenkbewegung aus. Die Schwenkbewegung ist weniger gern gesehen. Dafür ist die Mechnik der Nadelwalze aber von einfachster Bauart.
Ein Nadelbalken oder Nadelbrett führt ausschließlich eine Hub- und Senkbewegung aus. Dafür ist die Mechanik aber etwas komplizierter. Es wird Schaum entweder schrittweise unter dem Nadelbalken oder Nadelbrett durchgeführt. Die Nadelung findet dann in der Ruhelage des Schaumes statt.
Oder der Nadelbalken bzw. das Nadelbrett wird mit dem bewegten Schaum mitbewegt und bei Erreichen gleicher Geschwindigkeit gegen und in den Schaum bewegt bzw. herausbewegt. Nach Beendigung eines Nadelungsvorganges wird der Nadelbalken oder das Nadelbrett wieder in die Ausgangslage zurückbewegt. Bei dieser Verfahrensweise übt der Nadelbalken bzw. das Nadelbrett auch eine hin- und hergehende Bewegung aus, die mit der Vorschubbewegung des Schaumes fluchtet.

Die Nadelwalzen bzw. Nadelbalken bzw. Nadelbretter können mit einer geringen Zahl von Nadeln pro Flächeneinheit versehen sein. Die gewünschte Zahl von Perforationen kann durch mehrmaliges Nadeln erreicht werden. Es kann auch eine Nadelzahl verwendet werden, die der Anzahl gewünschter Nadelungen pro Flächenheit entspricht.

Die Zellen könnten auch mit Messern, die in einem dichten Abstand zueinander stehen, über die gesamte Länge der Bahn aufgeschnitten werden. Die Schnitttiefe muss so gewählt werden, dass die Bahn zusammenhängend bleibt. Der Abstand der Messer sollte vorzugsweise zwischen 2 und 20 mm betragen.
Als Messer eignen sich z.B. scheibenförmige, umlaufende Messer. Es können mehrere Messer auf einer Welle angeordnet werden, so daß mit einem Durchlauf alle Schnitte erreicht werden. Günstig ist, wenn die Schneidgeschwindigkeit über die Drehzahl der umlaufenden scheibenförmigen Messer einstellbar ist.
Günstig ist auch eine Anstellbarkeit der Messer.
Wahlweise ist die Anstellbarkeit auch mit einem Bewegungsantrieb gekoppelt, der eine periodische Hub- und Senkbewegung der Messer erlaubt, so daß bestimmte oder beliebig einstellbare Schnittlängen mit bestimmten oder beliebig einstellbaren Abständen entstehen.

Ein Teil der Zellen des Polyethylenleichtschaum kann durch Druck zum Platzen gebracht werden. Dabei kann der Schaum z. B. zwischen zwei Preß-Flächen gelegt und zusammengedrückt werden. Die Flächen können zylinderförmig oder eben angeordnet sein, mit oder ohne Struktur oder Profilierung.
Die Preßflächen können ganz- oder teilflächig mit dem Schaum Berührung haben. Eine teilflächige Berührung entsteht z.B., wenn die Preß-Flächen mit Erhebungen und/oder Vertiefungen versehen sind, so daß sich eine gleichmäßige Verteilung von Schaumbereichen mit geplatzen Zellen einstellt.

Es ist auch möglich, die Zellen elektrisch über eine Spannungsentladung zwischen zwei Elektroden durch Funken zu zerstören.

Der erfindungsgemäß erzeugte Schaum kann ohne oder mit einseitiger oder mehrseitiger Beschichtung zur Anwendung gebracht werden. Dabei können Folien zur Anwendung kommen, welche den Schaum teilflächig oder vollflächig überdecken oder sogar einseitig oder mehrseitig einen Überstand aufweisen.
Wahlweise kann auch eine Verbindung mit Platten oder mit Paneelen erfolgen. Vorzugsweise findet eine Anwendung auf Laminatplatten für Fußböden statt.

## Patentansprüche

1. Verfahren zur Verbesserung der Schall dämmenden Eigenschaften an PE-Schaum, insbesondere an bahnenförmigem oder plattenförmigem Leichtschaum mit einem Raumgewicht kleiner 50 kg pro Kubikmeter zwischen zwei Schalen, **gekennzeichnet durch** Verringerung des Anteils der tragenden Zellen im Zellgerüst.

2. Verfahren nach Anspruch 1, **dadurch gekennzeichnet, daß** der PE-Schaum teilweise perforiert und/oder durch Schlitzung eine teilweise Zerstörung seiner Zellen erfährt.

3. Verfahren nach Anspruch 2, **dadurch gekennzeichnet, daß** die Perforation durch Nadelung oder durch Beaufschlagung mit Funken erfolgt

4. Verfahren nach Anspruch 3, **dadurch gekennzeichnet, daß** vorzugsweise 1 bis 30 Nadelstiche, noch weitere bevorzugt 5 bis 15 Nadelstiche pro Quadratzentimeter erfolgen und oder eine Nadel mit einem Durchmesser von 0,1 bis 3 mm verwendet wird und/oder die Nadelung nicht durchgehend durch den Schaum erfolgt.

5. Verfahren nach Anspruch 3, **dadurch gekennzeichnet, daß** Schlitze im Abstand von 2 bis 20 mm in den Schaum eingebracht werden und/oder die Schlitzung nicht durchgehend durch den Schaum erfolgt.

6. Verfahren nach Anspruch 4 oder 5, **gekennzeichnet durch** eine Nadelungstiefe oder Schlitztiefe von mindestens 0,2 mm und höchstens bis auf einen Abstand von 1 mm zur gegebenüberliegenden Schaumfläche.

7. Verfahren nach einem der Ansprüche 3 bis 6, **dadurch gekennzeichnet, daß** für die Nadelung Nadelwalzen oder heb- und senkbare Nadelbalken oder heb- und senkbare Nadelbretter verwendet werden.

8. Verfahren nach Anspruch 7, **dadurch gekennzeichnet, daß** die Nadelung bei schrittweise bewegtem Schaum in der Ruhelage des Schaumes erfolgt oder bei kontinuierlich bewegtem Schaum unter Bewegung des Nadelbalkens bzw. des Nadelbrettes erfolgt, wobei die Geschwindigkeit des Nadelbalkens bzw. des Nadelbrettes gleich der Bewegungsgeschwindigkeit des Schaumes ist.

9. Verfahren nach Anspruch 2 oder 5, **gekennzeichnet durch** die Verwendung von Messern zum Schlitzen.

10. Verfahren nach Anspruch 9, **gekennzeichnet durch** Verwendung scheibenförmiger, umlaufender Messer.

11. Verfahren nach Anspruch 10, **gekennzeichnet durch** Verwendung mehrerer im Abstand voneinander auf einer Welle angeordneter scheibenförmiger, mit der Welle umlaufender Messer und/oder **durch** Einstellung der Schneidgeschwindigkeit mit Änderung der Drehzahl der umlaufenden scheibenförmigen Messer und/oder Anstellung der Messer und/oder Hubund Senkbewegung der Messer zur Erzeugung gewünschter Schnittlängen und/oder gewünschter Abstände zwischen den Schnitten in deren Längsrichtung.

12. Verfahren nach einem der Ansprüche 1 bis 11, **dadurch gekennzeichnet, daß** Polyethylen in Mischung mit EVA und/oder PP und/oder PMMA und/oder Derivaten davon oder Copolymeren zur Herstellung des Schaumes verwendet wird.

13. Verfahren nach einem der Ansprüche 1 bis 12, **daduch gekennzeichnet, daß** Schaum mit einer Dicke von 2 bis 20mm, vorzugsweise 5 bis 12 mm, und/oder einem Raumgewicht von 10 bis 80 kg pro Kubikmeter, vozugsweise zwischen 15 bis 30 kg pro Kubikmeter und/oder einer Zellgröße von 1 bis 7 mm, vorzugsweise zwischen 2 bis 5 mm hergestellt wird.

14. Verfahren nach einem der Ansprüche 1 bis 13, **gekennzeichnet durch** Verbindung des Schaumes mit einem Laminat und/oder Beschichtung mit einer Folie.

15. Verfahren nach Anspruch 14, **gekennzeichnet durch** eine vollflächige Beschichtung oder Verwendung einer Folie oder Laminat mit einem einseitigen oder mehrseitigen Überstand.
